# EUROPÄISCHE PATENTSCHRIFT

(11) **EP 2 241 652 B1**
(45) Veröffentlichungstag und Bekanntmachung des Hinweises auf die Patenterteilung: **13.03.2019**
(21) Anmeldenummer: 10166900.0
(22) Anmeldetag: 29.10.2005
(51) Int. Cl.: C23C 18/12, F28F 13/18, F25B 17/08, C04B 35/00

(54) **VERFAHREN ZUR HERSTELLUNG EINES MIT EINER ZEOLITH-SCHICHT BESCHICHTETEN SUBSTRATS**
METHOD FOR PRODUCTION OF A SUBSTRATE COATED WITH A ZEOLITE LAYER
PROCEDE DE PRODUCTION D'UN SUBSTRAT RECOUVERT D'UNE COUCHE DE ZEOLITHE

(30) Priorität: 29.10.2004 DE 102004052976
(43) Veröffentlichungstag der Anmeldung: 20.10.2010
(62) Teilanmeldung aus: 05806569.9
(73) Patentinhaber: Fahrenheit GmbH, 80803 München (DE)
(72) Erfinder: Schwieger, Wilhelm, 91080 Spardorf (DE); Thangaraj, Selvam, 97072 Würzburg (DE); Herrmann, Ralph, 91058 Erlangen (DE); Reddy, Marthala, 70174 Stuttgart (DE); Scheffler, Franziska, 91056 Erlangen (DE); Schmidt, Ferdinand, 79102 Freiburg (DE); Mittelbach, Walter, 79111 Freiburg (DE); Henning, Hans-Martin, 79100 Freiburg (DE); Bauer, Jürgen, 96215 Lichtenfels (DE)
(74) Vertreter: Kruspig, Volkmar

(56) Entgegenhaltungen:
- DE-A1- 10 309 009
- FR-A1- 2 719 238
- US-A1- 2002 110 699
- US-A1- 2003 091 872

## Beschreibung

Beschrieben wird ein Verfahren zur Herstellung einer Zeolith-Schicht auf einem metallischen Substrat, umfassend die folgenden Verfahrensschritte: Herstellen einer wässrigen Suspension, umfassend mehrere Komponenten, wobei eine Komponente wenigstens ein netzwerkbildendes Element aus der dritten, vierten oder fünften Hauptgruppe des Periodensystems umfasst und das metallhaltige Substrat wenigstens eines der netzwerkbildenden Elemente aufweist, Einbringen des metallhaltigen Substrats in die wässrige Suspension, Erwärmen der wässrigen Suspension und des darin befindlichen metallhaltigen Substrats zur in-situ-Kristallisation einer Zeolith-Schicht auf dem metallhaltigen Substrat. Darüber hinaus betrifft die Erfindung ein nach diesem Verfahren erhaltenen Wärmetauscher.

Zeolithe sind im engeren mineralogischen Sinne Silikat-Minerale und insbesondere Alumino-Silikate mit einer chemisch komplexen Struktur, welche durch die Ausbildung poröser Tetraeder-Netzwerke (T-Netzwerke) charakterisiert sind. Nach der allgemeineren Definition der IZA (International Zeolithe Association) werden unter Zeolithen solche Materialien verstanden, welche T-Netzwerke mit einer Netzwerkdichte von < 19 T-Atome pro 1000 Å³ aufweisen. Zeolithe weisen eine Struktur mit inneren Hohlräumen auf, wobei diese Hohlräume molekulare Größendimensionen annehmen können. Hieraus begründet sich die Eigenschaft von Zeolithen, Fremdatome beziehungsweise Fremdmoleküle in ihre poröse Struktur aufnehmen zu können, beispielsweise können Zeolithe große Mengen von Wasser speichern und bei Erhitzung wieder freigeben. Zeolith-Materialien in Kontakt mit einem Wärmetauscher sind daher besonders geeignet zum Aufbau eines Latent-Wärmespeichers. Hierzu werden nach dem Stand der Technik entweder Schüttungen von geformten Zeolith-Materialien oder Zeolithe verwendet, welche in offenporige Festkörper, etwa Metallschwämmen, die in thermischem Kontakt mit einem Wärmetauscher stehen, eingebracht sind. Für letzteres wird beispielsweise auf die DE 101 59 652 C2 verwiesen.

Ferner werden Zeolithe von der chemischen Industrie für eine Vielzahl weiterer Anwendungen verwendet. Dies sind zum Beispiel Ionenaustauschprozesse, wobei hierfür meist synthetisch hergestellte Zeolithe in Pulverform mit einer Kristallgröße von wenigen Mikrometern eingesetzt werden. Außerdem werden Zeolithe als Molekularsiebe verwendet, wobei auch hier das Zeolith-Material als lose Schüttung von Kristallen oder geformten Materialien in ein Filtersystem eingebracht werden kann.

Für Anwendungen, bei denen den Zeolithen Wärme zugeführt wird beziehungsweise bei denen vom Zeolith-Material Wärme abgezogen werden soll, sind lose Zeolith-Schüttungen deshalb ungeeignet, weil ein hinreichender thermischer Kontakt zu angrenzenden Wärmetauscherstrukturen nur unzureichend bewerkstelligt werden kann. Außerdem muss insbesondere für Latentwärmespeicher das üblicherweise als Sorptiv bezeichnete Arbeitsmedium dem Zeolith als Sorbens-Material in effektiver Art und Weise zugeführt werden. Dies setzt makroskopische Transportporen im Sorbens-Material voraus. Aus diesem Grund wird für solche Anwendungszwecke der als Pulver synthetisierte Zeolith zu größeren Einheiten in Form von Pellets mit Hilfe eines Binders verformt. Nachteilig ist jedoch, dass durch die meisten Bindemittel die anwendungsrelevanten Eigenschaften der Zeolithe beeinflusst und meist nachteilig verändert werden. Außerdem kann bei der Verwendung von Pellets noch kein hinreichender thermischer Kontakt zu angrenzenden Wärmetauschern sichergestellt werden. Aus diesem Grund werden Systeme aus Wärmetauschern vorgeschlagen, auf die eine Zeolith-Schicht aufgebracht wird. Typisch für die bekannten Beschichtungsverfahren von Substraten mit Zeolithen ist ein zweistufiges Vorgehen. Zunächst wird in einem vorangehender Syntheseschritt ein Zeolith-Pulver hergestellt. Dieses Zeolith-Pulver kann mechanisch nachbehandelt werden, etwa durch Zerkleinerungs- oder Mahlschritte, so dass ein pulverförmiges Zeolith mit einer eingestellten Teilchen (Kristall-Größe) entsteht. Nachfolgend wird das so synthetisierte oder vorsynthetisierte Zeolith-Material meist mit einem Binder vermischt und als sogenanntes coating auf das Trägersubstrat aufgebracht.

Nachteilig an einer solchen Vorgehensweise ist jedoch, dass insbesondere bei komplexen, dreidimensionalen Wärmetauscherstrukturen das Aufbringen von gleichmäßig dicken Zeolith-Schichten auf der gesamten Oberfläche des Wärmetauschers schwierig ist. Außerdem weist ein solches postsynthetisches Beschichtungsverfahren eine Vielzahl von Herstellungsschritten auf. Ferner verändern die meisten Binder die relevanten Eigenschaften der Zeolithe, da die bindenden Moleküle und Partikel sich auf der Oberfläche der Zeolith-Kristalle anlagern.

US 2003/0091872 A1 beschreibt ein Verfahren zum Herstellen einer Zeolith-Schicht auf einem Metall wie Aluminium oder Nickel oder Stahl oder Titan. Auf dieser werden klassische Alumosilikat-Zeolithe aufgebaut, was durch Verwendung von Synthese-Suspensionen für klassische Alumosilikat-Zeolithe im üblichen pH-Bereich von neutral bis pH 12 gelingt. Auch die Suspension enthält Aluminium. Nach dem Einbringen des aluminiumhaltigen Substrats in die aluminiumhaltige Suspension werden Aluminiumatome des Substrats in das Zeolith-Netzwerk eingebaut, wodurch die Haftung der Zeolith-Schicht auf dem Substrat verbessert wird.

Die DE 103 09 009 A1 beschreibt ein Verfahren, bei welchem keramische Trägermaterialien eingesetzt werden. Dabei ist der Träger gleichzeitig Spender für das netzwerkbildende Silizium zur Herstellung klassischer Alumosilikat-Zeolithe. Somit betrifft dieses bekannte Verfahren die Herstellung einer Zeolith-Schicht auf einem keramischen Trägermaterial, wobei dieses in eine wässrige Suspension eingebracht ist, die wenigstens ein netzwerkbildendes Element bzw. einen Netzwerkbildner enthält. Schließlich wird die Suspension erwärmt, um das Verfahrenserzeugnis zu erhalten. Der bekannte technische Vorschlag sieht nicht vor, dass die Suspension ein netzwerkbildendes Element im Unterschuss enthält. Gleiches gilt für den Stand der Technik nach der FR 2 719 238 A1. Sie betrifft einen anorganischen porösen Verbundwerkstoff, der ein anorganisch poröses Substrat und eine mineralische feste Phase aufweist, welche eine kristalline poröse Struktur z.B. in Form eines zeolithischen Materials darstellt. Die kristalline poröse Struktur wird direkt innerhalb des porösen Substrats erhalten. Nirgendwo wird davon gesprochen, dass aus einer Suspension die Zeolithbildung erfolgt, wobei ein netzwerkbildendes Elemente im Unterschuss vorliegt.

Auch sind weitere Druckschriften bekannt geworden, die das Herstellen einer Suspension mit Elementen beschreiben, die einen Zeolithen bilden können, ferner das Einbringen eines Substrats in die Suspension sowie das Erwärmen zur in-situ-Kristallisation einer hochviskosen Schicht klassischer Alumosilikat-Zeolithe auf dem Substrat. Siehe EP 0 649 387 B2, EP 1 222 961 A2 und JP 08119624 A.

Die bekannten Verfahren haben nicht voll befriedigt. Es bilden sich hierbei zwar Schichten aus klassischen Alumosilikat-Zeolithen, jedoch ist deren Verankerung am Substrat nicht so perfekt, wie sie sein sollte.

Der Erfindung liegt die Aufgabe zugrunde, ein Herstellungsverfahren für Zeolith-Schichten auf metallhaltigen Substraten anzugeben, durch welches die Eigenschaften der Zeolithe nicht nachteilig beeinflusst werden und welches sicherstellt, dass ein ungehinderter Zugang zur mikroporösen Struktur der Zeolith-Schicht gewährleistet ist. Vor allem sollte die Zeolith-Schicht am Substrat zuverlässig verankert werden. Die auf das metallhaltige Substrat aufgebrachte Zeolith-Schicht sollte sich somit durch eine gute Anhaftung auf dem metallhaltigen Substrat auszeichnen. Ferner sollte das Verfahren mit einer gegenüber dem Stand der Technik verringerten Anzahl von Verfahrensschritten durchführbar sein und ferner dazu geeignet sein, Substrate mit komplexer dreidimensionaler Struktur, insbesondere Wärmetauscher, mit einer Zeolith-Beschichtung gleichmäßiger Stärke zu belegen.

Diese Aufgabe wird durch ein Verfahren der eingangs geschilderten Art dadurch gelöst, dass wenigstens eines der in der wässrigen Suspension vorliegenden netzwerkbildenden Elemente im Hinblick auf den Zeolith-Bildungsprozess und die Endstruktur des Zeolithen im Unterschuss vorliegt, wobei das Molverhältnis zwischen (dem) den im Unterschuss vorliegenden netzwerkbildenden Element(en) in der wässrigen Suspension zur Summe aller in der wässrigen Suspension vorliegenden netzwerkbildenden Elemente unter 0,4 liegt und dem metallhaltigen Substrat das/die im Unterschuss vorliegende(n) netzwerkbildende(n) Element(e) entzogen und in die Zeolith-Schicht eingebaut werden.

Gegenstand der Erfindung ist des Weiteren ein vorteilhafter Wärmetauscher mit einem metallhaltigen Substratmaterial, das nach dem erfindungsgemäßen Verfahren mit einer Zeolith-Beschichtung versehen wird und wobei die Kristalle der Zeolith-Schicht in ihrer Haupt- und Wachstumsrichtung mehr oder weniger senkrecht zur Substratoberfläche orientiert sind.

Zur Lösung der Aufgabe haben die Erfinder zunächst erkannt, dass eine Zeolith-Schicht auf dem metallhaltigen Substrat mittels einer in-situ-Synthese hergestellt werden muss, um die Verwendung von Bindern zur Verfestigung von postsynthetisch hergestellten Zeolithen auf dem Substrat zu vermeiden. In einem weiteren Schritt haben die Erfinder erkannt, dass eine solche In-situ-Kristallisation von Zeolith-Schichten auf metallhaltigen Substraten dann zu einem besonders innigen Kontakt zwischen der Zeolith-Schicht und dem metallhaltigen Substrat führt, wenn bei der in-situ-Kristallisation dem metallhaltigen Substrat gezielt Atome entnommen werden und in das entstehende Netzwerk des Zeolithen eingebaut werden. In der vorliegenden Anwendung wird diese Bedingung als gerichtete "Direkt-Synthese" bezeichnet.

Zur Realisierung der Direkt-Synthese bei der in-situ-Kristallisation der Zeolith-Schichten auf dem metallhaltigen Substrat wird von einem solchen metallhaltigen Substrat ausgegangen, welches einen hinreichenden Anteil an netzwerkbildenden Elementen der dritten, vierten oder fünften Hauptgruppe des Periodensystems umfasst. Besonders bevorzugt wird hierbei ein metallhaltiges Substrat verwendet, welches Aluminium und/oder Silizium enthält. Im einfachsten Fall ist dies ein Substrat aus Aluminium oder ein Substrat mit einer Aluminium-Beschichtung. Außerdem kommen Aluminium- oder Silizium-haltige Legierungen in Frage, dies kann beispielsweise ein legierter Stahl sein, welcher nach ISO 4948 einen Massengehalt von wenigstens 0,1 Gew.-% Aluminium und/oder wenigstens 0,5 Gew.-% Silizium aufweist.

Entsprechend den klassischen Synthese-Verfahren von Zeolithen werden die zur Ausbildung der Zeolith-Struktur notwendigen Ausgangsstoffe in eine wässrige Suspension gebracht. Eine solche wässrige Suspension umfasst wenigstens ein netzwerkbildendes Element aus der dritten, vierten oder fünften Hauptgruppe des Periodensystems.

Im Unterschied zur klassischen Zeolith-Synthese wird für das erfindungsgemäße Verfahren eine Konzentration für wenigstens eines der netzwerkbildenden Elemente für die Zeolith-Schicht in der wässrigen Suspension eingestellt, weiche den Bedarf für dieses netzwerkbildende Element nicht in optimaler Weise deckt. Im folgenden wird hierfür der Ausdruck "Unterschuss" verwendet, das heißt in der Reaktionsmischung in Form einer wässrigen Suspension liegt wenigstens eines der netzwerkbildenden Elemente im Unterschuss im Hinblick auf den Zeolithbildungsprozess und die Endstruktur des Zeolithen vor.

Die Erfinder haben nämlich folgendes erkannt:
Enthält die Suspension eine größere Menge des netzwerkbildenden Elementes für die Zeolithschicht, als den genannten Unterschuss, so kommt es zu einer unerwünschten Kristallisation überall im Bulkvolumen in der Suspension, sofern nicht lokale Temperaturverhältnisse dies verhindern. Die dabei gebildeten Kristalle sind somit zwar vorhanden, jedoch sind sie nicht oder nicht im gewünschten Maße mit dem metallhaltigen Substrat verankert, da die netzwerkbildenden Elemente überall in der Suspension in optimaler Weise vorhanden sind. Ist hingegen ein netzwerkbildendes Element nur im Unterschuss vorhanden, so kann dieses bei geeigneter Reaktionsführung durch das metallhaltige Substrat im notwendigen Maße zur Verfügung gestellt werden. Man könnte somit auch sagen, dass die Suspension bezüglich eines der netzwerkbildenden Elemente verarmt ist. Ist hingegen das netzwerkbildende Element nur im Unterschuss vorhanden, so geht der sich bildende Zeolith begierig eine chemische Reaktion mit dem entsprechenden netzwerkbildenden Element des Substrates ein.

Es mag zwar sein, dass die sich bildende und am metallhaltigen Substrat verankerte Schicht relativ dünn ist. Sollte dies im konkreten Falle nachteilig sein, so lässt sich der Vorgang ohne weiteres wiederholen, in dem in einem weiteren Verfahrensschritt abermals eine in-situ-Kristallisation mit entsprechend angepassten Konzentrationen der netzwerkbildenden Elemente in der Suspension auf der mit dem metallhaltigen Substrat verankerten, ersten Zeolithschicht durchgeführt wird. Dabei stellt die auf dem metallhaltigen Substrat verankerte, erste Zeolithschicht das Reservoir für die netzwerkbildenden Elemente der Kristallisationskeime für die wiederholte Kristallisation dar und ist somit auch der Startpunkt des weiteren Kristallisationsprozesses.

Das Molverhältnis des in Unterschuss vorliegenden netzwerkbildenden Elements in der Suspension zur Summe aller netzwerkbildenden Elemente in der Suspension sollte sich im Bereich der folgenden Werte bewegen: kleiner als 0,4 oder als 0,3 oder als 0,2 oder als 0,1.

Der Kerngedanke der Erfindung lässt sich wie folgt zusammenfassen: Aufgrund des geringen Anteils eines netzwerkbildenden Elements in der Suspension wird eine Kristallisation in der Suspension zunächst vermieden. Vielmehr wird vorrangig an der Grenzfläche zum metallhaltigen Substrat eine Situation erzeugt, die zu einer chemischen Verbindung zwischen den beiden netzwerkbildenden Elementen, dem einen aus dem metallhaltigen Substrat und dem anderen aus der Suspension, führt. Dabei kann es sich bei dem netzwerkbildenden Element aus dem metallhaltigen Substrat um Aluminium handeln, und bei dem netzwerkbildenden Element aus der Suspension um Phosphor. In der umgebenden Suspension fehlt somit völlig oder weitgehend eine Komponente, so dass die Kristallisation in der Suspension zunächst nicht stattfindet.

Das erfindungsgemäße System umfasst somit ein metallhaltiges Substrat und eine Suspension. Das metallhaltige Substrat ist nicht nur Träger, sondern zugleich Spender eines netzwerkbildenden Elementes. Die Suspension enthält mindestens Wasser und gegebenenfalls Phosphationen und zusätzlich möglicherweise Templatverbindungen, dies sind strukturdirigierende Agenzien (SDA) wie zum Beispiel Tetraalkylammoniumsalze oder oberflächenaktive Stoffe, sogenannte Tenside.

Die Suspension kann auch Si enthalten, aber auch Übergangsmetallionen.

Es versteht sich, dass zum Durchführen des Verfahrens weitere Maßnahmen oder Schritte notwendig sein können. Hierzu gehört das Erwärmen der wässrigen Suspension. Die zum Aufbau der Zeolith-Schicht notwendigen Anteile für die im Unterschuss in der wässrigen Suspension vorliegenden netzwerkbildenden Elemente werden dann entsprechend dem erfindungsgemäßen Verfahren dem metallhaltigen Substrat bei der in-situ-Synthese direkt entnommen. Dies führt wiederum dazu, dass diese netzwerkbildenden Atome vom metallhaltigen Substrat in die wachsende Zeolith-Schicht überwechseln und somit ein Ineinanderwachsen von Zeolith-Schicht und Substrat bewerkstelligt wird. Durch diese Maßnahme kann ein besonders inniger Kontakt und eine mechanisch stabile Zeolith-Beschichtung der mittels in-situ-Kristallisation hergestellten Zeolithe auf dem metallhaltigen Substrat bewirkt werden.

Je nach Wahl des metallhaltigen Substrats und dessen Fähigkeit zur Freisetzung von netzwerkbildenden Atomen bei der in-situ Kristallisation kann die Konzentration beziehungsweise die fehlende Quantität an netzwerkbildenden Elementen in der wässrigen Suspension eingestellt werden. Im Extremfall kann auf wenigstens eines der netzwerkbildenden Elemente im metallhaltigen Substrat im Wesentlichen verzichtet werden.

Die weiteren Synthesebedingungen für die in-situ-Kristallisation in Verbindung mit einer Direkt-Synthese zur Herstellung von dauerhaften Zeolith-Schichten auf metallhaltigen Substraten können im Rahmen des fachmännischen Ermessens entsprechend zur klassischen Zeolith-Synthese gewählt werden.

Zur Durchführung der Synthese wird das zu beschichtende Substrat in die wässrige Suspension der Ausgangsstoffe eingebracht. Die wässrige Suspension und das darin befindliche metallhaltige Substrat werden dann einer hydrothermalen Behandlung unterzogen. Bevorzugt werden hierbei Temperaturen zwischen 50 und 250°C und insbesondere bevorzugt zwischen 100°C und 200°C während der in-situ Kristallisation eingestellt. Außerdem wird bevorzugt mit einem autogenen Druck gearbeitet, also einem solchen, der sich in Abhängigkeit von der Prozesstemperatur und der sich einstellenden Dampfdrücke in der Reaktionsmischung im abgeschlossenen Reaktionsgefäß aufbaut. Ferner wird nach Abschluss der in-situ Kristallisation eine möglichst rasche Abkühlung des beschichteten metallhaltigen Substrats zum Stoppen der Reaktion bevorzugt. Dies kann beispielsweise durch eine Luftströmung des Reaktionsaggregats oder andere geeignete verfahrenstechnische Maßnahmen bewirkt werden.

Als besonders bevorzugte Zeolith-Beschichtung haben sich mittels in-situ und direkter Kristallisation hergestellte SAPO- und ALPO- und MeALPO-Schichten herausgestellt. Mikroporöse SAPO-Schichten enthalten neben Silizium und Aluminium als netzwerkbildendes Element Phosphor. Entsprechend enthalten MeALPO-Materialien auch verschiedene Übergangsmetallionen als netzwerkbildende Elemente. Mikroporöse ALPO-Beschichtungen bestehen aus Aluminium und Phosphor, aus welchen die Tetraeder als Baueinheiten für das Netzwerkgerüst ausgebildet werden, die wiederum zu ringförmigen sekundären Baueinheiten (zum Beispiel 4- und 6-Ringen) zusammengesetzt werden, die sich dann zu tertiären Baueinheiten wiederum zur endgültigen Zeolith-Struktur und weiter zusammenlagern.

Nachfolgend wird das erfindungsgemäße Verfahren anhand eines Ausführungsbeispiels dargestellt, bei dem ein SAPO 34 auf einem Aluminium-Substrat hergestellt wird.

Zunächst wird eine wässrige Suspension aus 23,6 g Wasser und 2,38 g 85%iger Phosphorsäure, welche als Phosphorquelle dient, 2,0 g Kieselsol (30,4% SiO₂ in Wasser) als Siliziumquelle und 5,4 g Morpholin als Templatmolekül hergestellt. Die genannten Gewichtsangaben sind hierbei gerundet. Im Einzelnen wird hierzu eine erste Teilmischung hergestellt, bei der die Phosphorsäure mit 9,4 g Wasser in einem Mischgefäß vorgelegt wird. Ferner wird eine zweite Teilmischung hergestellt, welche aus 2,0 g Kieselsol und 5,4 g Morpholin und 9,4 g Wasser besteht und welche zur ersten Teilmischung unter ständigem Rühren zugetropft wird. Die fertiggestellte erste Teilmischung besteht aus 6 g Wasser, 6 g 85 %iger Phosphorsäure und 3,6 g Pseudoböhmit. Ferner wird eine zweite Teilmischung hergestellt, welche aus 1,6 g Aerosil und 4,5 g Morpholin und 6 g Wasser besteht und welche zur ersten Teilmischung unter ständigem Rühren zugetropft wird. Dieser so entstandenen Mischung aus der ersten und der zweiten Teilmischung wird sodann 4,8 g Wasser zugegeben und das Rühren für weitere zwei Stunden fortgesetzt, so dass eine gebrauchsfertige wässrige Suspension entsteht. In der wässrigen Suspension liegt im konkreten Beispiel kein Aluminium vor (extremer Unterschuss), wobei das optimale Aluminium-Phosphor-Verhältnis im Wesentlichen 1:1 wäre. Bei der Herstellung der Zeolithschicht wird demnach Aluminium aus dem Substrat zum Ausgleich dieses Unterschusses im Sinne einer direkten Synthese herausgezogen und in die aufwachsende SAPO-Schicht eingebaut.

Zur in-situ Kristallisation wird die wässrige Suspension zusammen mit dem zu beschichteten Aluminium-Substrat, dies kann beispielsweise ein Wärmetauscher aus Aluminium oder ein solcher mit einer Aluminiumbeschichtung sein, in einen Reaktor gegeben und für eine Zeitdauer von beispielsweise 24 Stunden auf 200 °C gehalten wird. Während dieses Zeitraums entsteht mittels in-situ-Kristallisation und unter direkter Verwendung von Aluminiumatomen aus dem Aluminium-Substrat eine mikroporöse SAPO-34-Schicht auf dem Aluminium. Der so beschichtete Aluminiumträger wird dem Reaktor entnommen, wobei vorteilhafterweise ein nachfolgender Waschschritt vorgenommen wird.

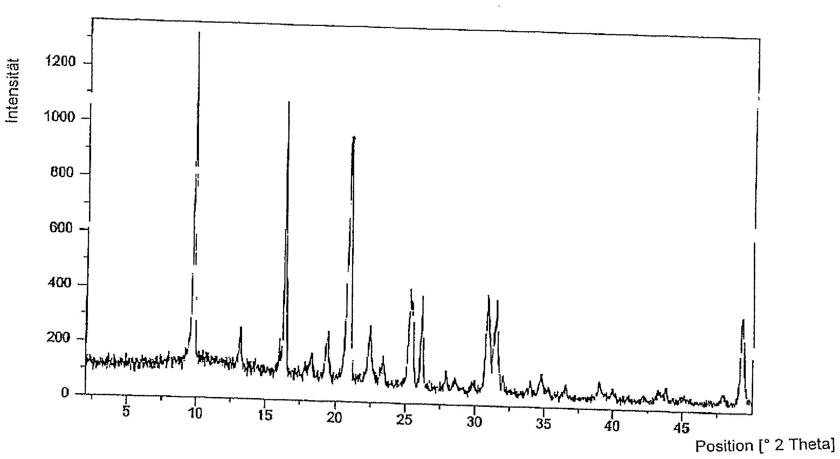

Aus Figur 1 ist das Röntgendiffraktogramm einer solchermaßen hergestellten Zeolith-Schicht auf einem Al-Substrat dargestellt, wobei die Abszisse die Winkelangaben angibt und die Ordinaten diesen entsprechende relative Intensitäten zuordnet. Zur Aufnahme wurde eine Kupfer-K-alpha-Linie verwendet. Aus einem Vergleich mit Literaturwerten kann durch das in Fig. 1 gezeigte Röntgendiffraktogramm ein Strukturnachweis für SAPO-34 erbracht werden. Die Erfinder haben folgendes erkannt: Bei Anwendung der erfindungsgemäßen starken Verdünnung der Suspension, bei welcher ein netzwerkbildendes Element zur Ausbildung der Zeolith-Schicht im Unterschuss vorliegt und der Wasseranteil gegenüber dem Stand der Technik deutlich erhöht wurde, ergibt sich eine bevorzugte Orientierung der Kristalle auf dem Substrat. Diese Orientierung drückt sich darin aus, dass die Haupt- und Wachstumsrichtung der Kristalle mehr oder minder senkrecht zur Substratfläche verläuft und die Kristalle vorwiegend senkrecht hierauf stehen. Die bevorzugte Orientierung stellt eine weitgehend gleichmäßige Ausrichtung der Kristalle dar und gewährleistet eine gleichmäßige Zugänglichkeit von Reaktanten oder Sorbentien in das Mikroporensystem der hergestellten Kristalle. Dies ist ein weiterer vorteilhafter Effekt, der sich aus der Erfindung ergibt.

Die angewendete wässrige Synthese-Suspension kann in ihren Eigenschaften in Abhängigkeit von ihrer Zusammensetzung von einer klaren Lösung, in der alle enthaltenen Bestandteile gelöst vorliegen, bis zu einem hochviskosen Gel variieren. In einer Weitergestaltung der Erfindung wird die wässrige Suspension, bevor ein zu beschichtendes metallhaltiges Substrat kontaktiert wird, zu einem Gel verarbeitet und die Reaktionsmischung in Form eines Gels, beispielsweise mittels eines Sol-Gel-Verfahrens, auf das zu beschichtende metallhaltige Substrat aufgebracht. Demnach wird in dem vorliegenden Text unter der voranstehend beschriebenen wässrigen Suspension auch eine solche verstanden, die hochviskos ist. Demnach wird unter einer wässrigen Suspension im weitesten Sinne eine Reaktionsmischung verstanden, die Wasser enthält, deren Konsistenz jedoch nicht nur auf eine wässrige beschränkt sein soll.

## Patentansprüche

1. Verfahren zur Herstellung einer Zeolith-Schicht auf einem metallhaltigen Substrat, umfassend die folgenden Verfahrensschritte:
1.1 Herstellen einer wässrigen Suspension, umfassend mehrere Komponenten, wobei
1.2 eine Komponente wenigstens ein netzwerkbildendes Element aus der dritten, vierten oder fünften Hauptgruppe des Periodensystems umfasst und
1.3 das metallhaltige Substrat wenigstens eines der netzwerkbildenden Elemente aufweist;
1.4 Einbringen des metallhaltigen Substrats in die wässrige Suspension;
1.5 Erwärmen der wässrigen Suspension und des darin befindlichen metallhaltigen Substrats zur in-situ-Kristallisation einer Zeolith-Schicht auf dem metallhaltigen Substrat, **dadurch gekennzeichnet, dass**
1.6 wenigstens eines der in der wässrigen Suspension vorliegenden netzwerkbildenden Elemente im Hinblick auf den Zeolith-Bildungsprozess und die Endstruktur des Zeolithen im Unterschuss vorliegt, wobei das Molverhältnis zwischen (dem) den im Unterschuss vorliegenden netzwerkbildenden Element(en) In der wässrigen Suspension zur Summe aller in der wässrigen Suspension vorliegenden netzwerkbildenden Elemente unter 0,4 liegt und
1.7 dem metallhaltigen Substrat das/die im Unterschuss vorliegende(n) netzwerkbildende(n) Element(e) entzogen und in die Zeolith-Schicht eingebaut werden.

2. Verfahren nach Anspruch 1, **dadurch gekennzeichnet, dass** das Molverhältnis wenigstens eines im Unterschuss vorliegenden netzwerkbildenden Elements in der wässrigen Suspension zur Summe aller netzwerkbildenden Elemente in der wässrigen Suspension unter 0,1 liegt.

3. Verfahren nach Anspruch 1 oder 2, **dadurch gekennzeichnet, dass** das metallhaltige Substrat ein Aluminium-Substrat ist.

4. Verfahren nach Anspruch 1 oder 2, **dadurch gekennzeichnet, dass** das metallhaltige Substrat Aluminium oder Silizium enthält oder mit einer Aluminium oder Silizium enthaltenden Legierung oder Verbindung beschichtet ist.

5. Verfahren nach Anspruch 1 oder 2, **dadurch gekennzeichnet, dass** das metallhaltige Substrat ein mit Aluminium und/oder Silizium legierter Stahl ist.

6. Verfahren nach wenigstens einem der Ansprüche 1 bis 5, **dadurch gekennzeichnet, dass** die wässrige Suspension mindestens ein organisches Schablonenmolekül oder ein organisches Templatmolekül umfasst.

7. Verfahren nach wenigstens einem der Ansprüche 1 bis 6, **dadurch gekennzeichnet, dass** die wässrige Suspension und das darin befindliche metallhaltige Substrat auf eine Temperatur zwischen 50°C und 250°C, Insbesondere zwischen 100°C und 200°C, erwärmt werden.

8. Verfahren nach Anspruch 7, **dadurch gekennzeichnet, dass** die wässrige Suspension und das darin befindliche metallhaltige Substrat in einem geschlossenen Gefäß erwärmt werden.

9. Verfahren nach wenigstens einem der Ansprüche 1 bis 8, **dadurch gekennzeichnet, dass** die wässrige Suspension in ein Gel umgewandelt und dieses auf das Substrat aufgebracht wird.

10. Verfahren nach mindestens einem der Ansprüche 1 bis 9, **dadurch gekennzeichnet, dass** auf der auf dem Substrat ausgebildeten ersten Zeolith-Schicht eine weitere Zeolith-Schicht aufkristallisiert wird.

11. Wärmetauscher mit einem metallhaltigen Substratmaterial, das nach einem Verfahren nach wenigstens einem der Ansprüche 1 bis 10 mit einer Zeolith-Beschichtung versehen wird und wobei die Kristalle der Zeolith-Schicht In ihrer Haupt- und Wachstumsrichtung mehr oder weniger senkrecht zur Substratoberfläche orientiert sind.

## Claims

1. A method for producing a zeolite layer on a metal-containing substrate, comprising the method steps of:
1.1 producing an aqueous suspension comprising a plurality of components, wherein
1.2 one component comprises at least one reticulation-forming element from the third, fourth or fifth main group of the periodic table, and
1.3 the metal-containing substrate exhibits at least one of the reticulation-forming elements;
1.4 introducing the metal-containing substrate into the aqueous suspension;
1.5 heating the aqueous suspension and the metal-containing substrate situated therein for an in-situ crystallization of a zeolite layer on the metal-containing substrate, **characterized in that**
1.6 at least one of the reticulation-forming elements present in the aqueous suspension is present in shortfall with respect to the zeolite forming process and the final structure of the zeolite, wherein the molar ratio between the reticulation-forming element(s) being present in shortfall in the aqueous suspension in relation the sum of all of the reticulation-forming elements present in the aqueous suspension is below 0.4, and
1.7 the reticulation-forming element(s) being present in shortfall is (are) extracted from the metal-containing substrate and incorporated into the zeolite layer.

2. The method according to claim 1, **characterized in that** the molar ratio of at least one reticulation-forming element being present in shortfall in the aqueous suspension in relation to the sum of all of the reticulation-forming elements in the aqueous suspension is below 0.1.

3. The method according to claim 1 or 2, **characterized in that** the metal-containing substrate is an aluminum substrate.

4. The method according to claim 1 or 2, **characterized in that** the metal-containing substrate contains aluminum or silicon or is coated with an alloy or compound containing aluminum or silicon.

5. The method according to claim 1 or 2, **characterized in that** the metal-containing substrate is a steel alloyed with aluminum and/or silicon.

6. The method according to at least one of claims 1 to 5, **characterized in that** the aqueous suspension comprises at least one organic pattern molecule or organic template molecule.

7. The method according to at least one of claims 1 to 6, **characterized in that** the aqueous suspension and the metal-containing substrate situated therein are heated to a temperature of between 50°C and 250°C, in particular between 100°C and 200°C.

8. The method according to claim 7, **characterized in that** the aqueous suspension and the metal-containing substrate situated therein are heated in a closed vessel.

9. The method according to at least one of claims 1 to 8, **characterized in that** the aqueous suspension is transformed into a gel, and the gel is applied onto the substrate.

10. The method according to at least one of claims 1 to 9, **characterized in that** a further zeolite layer is formed by crystallization on the first zeolite layer formed on the substrate.

11. A heat exchanger having a metal-containing substrate material which is provided with a zeolite coating in accordance with a method according to at least one of claims 1 to 10, and wherein the crystals of the zeolite layer are oriented in their main and growth directions more or less perpendicular to the substrate surface.

## Revendications

1. Procédé pour la réalisation d'une couche de zéolithe sur un substrat contenant du métal, comprenant les étapes de procédé suivantes :
1.1 réalisation d'une suspension aqueuse, comprenant plusieurs composantes, dans laquelle
1.2 une composante comprend au moins un élément formateur de réseau du troisième, du quatrième ou du cinquième groupe principal du système périodique, et
1.3 le substrat contenant du métal comprend au moins un des éléments formateurs de réseau ;
1.4 introduction du substrat contenant du métal dans la suspension aqueuse ;
1.5 chauffage de la suspension aqueuse et du substrat contenant du métal qui se trouve dans celle-ci pour entraîner une cristallisation in situ d'une couche de zéolithe sur le substrat contenant du métal, **caractérisé en ce que** 1.6 au moins un des éléments formateurs de réseau qui se présentent dans la suspension aqueuse se présente, à l'égard du processus de formation de zéolithes et de la structure finale des zéolithes, en quantité déficitaire, de sorte que le rapport molaire entre l'élément ou les éléments formateurs de réseau qui se présente(nt) en déficit dans la suspension aqueuse sur la somme de tous les éléments formateurs de réseau qui se présentent dans la solution aqueuse est inférieur à 0,4,
1.7 soustraction du ou des élément(s) déficitaire(s) présent(s) formateur(s) de réseau hors du substrat contenant du métal et intégration de celui-ci/ceux-ci dans la couche de zéolithe.

2. Procédé selon la revendication 1, **caractérisé en ce que** le rapport molaire d'au moins un élément formateur de réseau présent en quantité déficitaire dans la suspension aqueuse sur la somme de tous les éléments formateurs de réseau dans la suspension aqueuse est inférieur à 0,1.

3. Procédé selon la revendication 1 ou 2, **caractérisé en ce que** le substrat contenant un métal est un substrat en aluminium.

4. Procédé selon la revendication 1 ou 2, **caractérisé en ce que** le substrat contenant du métal contient de l'aluminium ou du silicium, ou est revêtu d'un alliage ou d'un composé contenant aluminium ou silicium.

5. Procédé selon la revendication 1 ou 2, **caractérisé en ce que** le substrat contenant du métal est un acier allié avec de l'aluminium et/ou du silicium.

6. Procédé selon l'une au moins des revendications 1 à 5, **caractérisé en ce que** la solution aqueuse inclut au moins une molécule organique modèle ou une molécule organique gabarit.

7. Procédé selon l'une au moins des revendications 1 à 6, **caractérisé en ce que** la suspension aqueuse et le substrat contenant du métal qui se trouve dans celle-ci sont échauffés à une température entre 50°C et 250°C, en particulier entre 100°C et 200°C.

8. Procédé selon la revendication 7, **caractérisé en ce que** la suspension aqueuse et le substrat contenant du métal qui se trouve dans celle-ci sont échauffés dans un récipient fermé.

9. Procédé selon l'une au moins des revendications 1 à 8, **caractérisé en ce que** la suspension aqueuse est convertie en un gel, et celui-ci est appliqué sur le substrat.

10. Procédé selon l'une au moins des revendications 1 à 9, **caractérisé en ce qu'**une autre couche de zéolithe est cristallisée sur la première couche de zéolithe réalisée sur le substrat.

11. Échangeur de chaleur comprenant un matériau de substrat contenant le métal, qui est revêtu le selon un procédé selon l'une au moins des revendications 1 à 10 avec un revêtement de zéolithe, dans lequel les cristaux de la couche de zéolithe sont orientés plus ou moins perpendiculairement à la surface du substrat dans leur direction principale et leur direction de croissance.
